# EUROPÄISCHE PATENTANMELDUNG

(11) **EP 1 074 775 A1**
(43) Veröffentlichungstag der Anmeldung: **07.02.2001**
(21) Anmeldenummer: 00116365.8
(22) Anmeldetag: 28.07.2000
(51) Int. Cl.: F16L 5/02, F16L 5/10

(54) **Rohrdurchführung**

(30) Priorität: 02.08.1999 DE 29913215 U; 20.03.2000 DE 20005066 U
(71) Anmelder: Korn, Doris, 37154 Northeim (DE)
(72) Erfinder: Korn, Doris, 37154 Northeim (DE)
(74) Vertreter: Rolf, Gudrun

(57) **Zusammenfassung**

Es wird eine Rohrdurchführung zur Verfügung gestellt, die einfach und funktionssicher zu montieren ist und die auf Dauer eine vollständige Abdichtung gegen eindringende Feuchtigkeit gewährleistet, was dadurch erzielt wird, dass die Rohrdurchführung aus einer Rohrmanschette (1) besteht, die einen hohlzylindrischen Abschnitt (2) und einen sich daran anschließenden tellerförmigen Abschnitt (3) aufweist, der hohlzylindrische Abschnitt (2) einen mit dem Außendurchmesser eines Rohres (10) identischen oder geringfügig größeren Innendurchmesser besitzt und auf dem hohlzylindrischen Abschnitt (2;12) mindestens ein Hohlkörper (6;16) mit zerstörbarer Hülle angeordnet ist, der mit einem Dichtmittel (7;17) gefüllt ist.

## Beschreibung

Die Erfindung betrifft eine Rohrdurchführung, insbesondere für im Erdreich oder unter Wasser verlegte Ver- und Entsorgungsleitungen jeglichen Durchmessers durch in Wände eingebrachte Durchgänge.

Bei der herkömmlichen Art einer Rohrdurchführung durch einen gebohrten Durchgang, beispielsweise durch das Mauerwerk einer Hauswand, werden diese Durchgänge zur Abdichtung gegen von außen eindringende Feuchtigkeit mit Mörtel verschlossen, wobei es schwierig ist, diesen über die gesamte Länge eines Durchganges um ein durch die Wand hindurchgeführtes Rohr einzubringen, sodass, ebenso wie bedingt durch die unterschiedlichen Wärmeausdehnungen der beteiligten Materialien oder auf Grund der glatten Oberfläche von PVC-Rohren, horizontal entlang eines Rohres verlaufende Spalte verbleiben oder Haarrisse entstehen können, die Feuchtigkeit in das Innere eines Hauses gelangen lassen.

Aufgabe der Erfindung ist es deshalb, eine Rohrdurchführung zur Verfügung zu stellen, die einfach und funktionssicher zu montieren ist und die auf Dauer eine vollständige Abdichtung gegen eindringende Feuchtigkeit gewährleistet.

Die Lösung dieser Aufgabe wird in Verbindung mit den Oberbegriffsmerkmalen erfindungsgemäß durch die im kennzeichnenden Teil des Hauptanspruches angegebene technische Lehre vermittelt.

Dadurch, dass die Rohrdurchführung aus einer Rohrmanschette besteht, welche einen hohlzylindrischen Abschnitt aufweist, der sich bis in einen gebohrten Durchgang hinein erstreckt und einen Innendurchmesser besitzt, der identisch oder geringfügig größer ist als der Außendurchmesser eines durch die Wand hindurchgeführten Rohres und dass am hohlzylindrischen Abschnitt ein tellerförmiger Abschnitt angesetzt ist, auf dem mindestens ein Hohlkörper mit zerstörbarer Hülle angeordnet ist, in dem sich ein Dichtmittel befindet, kann durch ein Aufschieben der Rohrmanschelle von außen z.B. gegen eine Kellerwand, bei dem eine Zerstörung des Hohlkörpers und ein Freisetzen des Dichtmittels erfolgt und sich dieses durch mehrfaches Drehen der Rohrmanschette um 360° gleichmäßig im axialen und auch im radialen Spalt zwischen Wand und Rohrmanschette verteilt, eine dauerhaft dichte Abdichtung erzeugt werden.

Vorteilhaft ist weiterhin, dass zwischen dem tellerförmigen Abschnitt und der Außenwand zusätzlich zu der horizontalen Dichtungsebene eine senkrechte Dichtungsebene erzeugt wird, wobei der tellerförmige Abschnitt bei angefüllter Erde oder unter Wasser zusätzlich von außen gegen die Außenwand angedrückt wird, sodass die Abdichtung zum einen mechanisch oder hydraulisch vorteilhaft auf Druck belastet und zum anderen ein möglicher Spalt durch den axialen Druck der auf den Teller einwirkenden Erd- oder Wassermassen verkleinert bzw. vollkommen verschlossen wird. Durch eine zusätzliche Abdichtung mit herkömmlichen Materialien, z.B. Schwarzanstrich oder Dickbeschichtung, wird eine weiter gesteigerte Sicherheit gegen das Eindringen von Feuchtigkeit in die Wand erreicht. Die Dicke einer solchen Wand kann demnach wahlfrei das Maß eine normalen Hauswand oder auch das einer Staumauer aufweisen.

Besonders vorteilhaft bei der erfinderischen Rohrdurchführung ist deren simple Handhabung durch einfaches Überschieben der mit dem mit Dichtmittel gefüllten Hohlkörper versehenen Rohrmanschette auf ein aus einer Wand herausragendes Rohr, wobei die Abdichtung durch Zerstören des die Dichtmasse enthaltenden Hohlkörpers und Drehen der Rohrmanschette und einer dabei erfolgenden Verteilung des Dichtmittels erzeugt wird. Diese Rohrdurchführung erweist sich zusätzlich als besonders stabil, da die auf sie im Einbauzustand einwirkenden Kräfte in vorteilhafter Weise zur Verstärkung der Verbindung beitragen. Die Rohrmanschette kann aus feuerfestem oder feuerhemmendem Material ausgebildet sein.

Weitere vorteilhafte Ausgestaltungen des Gegenstandes der Erfindung ergeben sich mit und aus der Kombination der nachfolgenden Unteransprüche.

Die erfinderische Rohrdurchführung kann auch entlang einer axialen Mittellängsebene geteilt ausgebildet sein, sodass sie sich auch bei bereits bestehenden Rohrverbindungen nachträglich aufsetzen lässt. Die Einzelteile der Rohrdurchführung sind dann bevorzugt durch gegenseitige Rasten miteinander verbindbar ausgestaltet. Die Teilungsebene kann glatte oder gezinkte Stoßkanten aufweisen.

Gemäß einer besonders bevorzugten Ausführungsform der Erfindung ist der Hohlkörper schlauchförmig ausgebildet und erstreckt sich vollständig um den hohlzylindrischen Abschnitt herum, sodass gewährleistet ist, dass bei der Zerstörung des Hohlkörpers das Dichtmittel über den gesamten Umfang des hohlzylindrischen Abschnittes und auch teilweise in den Bereich der radialen Kontaktfläche von tellerförmigem Abschnitt und Außenwand gelangt.

Eine weiter verbesserte Variante des erfinderischen Gegenstandes weist ein zweikomponentiges Dichtmittel, beispielsweise aus Grundmasse und Härter, in zwei separaten Hohlkörpern auf, sodass sichergestellt ist, dass das Dichtmittel nicht vorzeitig aushärtet. Eine vollständige Verteilung und gegebenenfalls Vermischung des Dichtmittels wird nach dem Andrücken der Rohrmanschette an die Außenwand durch ein mehrfaches Verdrehen um 360° gewährleistet. Um sicherzustellen, dass das Dichtmittel nicht nur an einer Stelle des Hohlkörpers austritt, können über den Umfang des hohlzylindrischen Abschnittes auch mehrere Hohlkörper angeordnet sein, sodass von vorne herein eine vollflächige Verteilung des Dichtmittels gewährleistet werden kann.

Das Dichtmittel besteht bevorzugterweise aus einem aushärtenden ein oder mehrkomponentigen Harz, sodass eine feste Klebeverbindung zwischen Rohrmanschette und der Innenwand des gebohrten Durchganges und der Außenwand hergestellt werden kann. Die einzelnen Komponenten, z.B. Grundmasse und Härter, können in unterschiedlichen Hohlkörpern aufbewahrt sein, so dass sie erst nach deren Zerstörung miteinander in der gewünschten Form reagieren können und das Harz aushärtet.

Bei einer ganz besonders bevorzugten Ausführungsform der Erfindung besitzt der hohlzylindrische Abschnitt zusätzliche Durchbrechungen, durch die das Dichtmittel bis auf die Oberfläche des Rohres gelangen kann und auch dort abdichtet, sodass insgesamt eine 100%ige Dichtigkeit der Rohrdurchführung erreicht wird.

Um einen Austritt des Dichtmittels in den freien Raum zwischen Rohr und Wand zu verhindern, kann im stirnseitigen Bereich des hohlzylindrischen Abschnitts der Rohrmanschette eine radial umlaufende Federlasche vorgesehen sein, die sich elastisch an die Innenfläche des Wanddurchgangs anlegen kann. Diese weist zur zusätzlichen mechanischen Befestigung der Rohrmanschette in einer Wand sich dort abstützende Rastnasen auf.

Zur besseren Handhabung der Rohrdurchführung sind an der Rohrmanschette axial vorspringende Laschen angeformt, die als Handhabungshilfen dienen und ein problemloses Drehen der Rohrmanschette auf dem Rohr in Richtung auf die Außenwand ermöglichen. Eine andere vorteilhafte Ausführungsform weist zu diesem Zweck in den tellerförmigen Abschnitt eingebrachte Werkzeugeingriffe auf.

Bei einer weiten, hoch feuerfesten Ausführungsform der Erfindung ist auf die Rohrmanschette ein Ring aus Beton oder einem anderen feuerhemmenden Material wie beispielsweise Schaumglas (Foamglas) aufgesetzt, der Ohrentaschen für die Laschen der Rohrmanschette aufweist sowie nach außen vorstehende Schlaufen oder eingeformte Handhaben, mit denen die Rohrmanschette gemeinsam mit dem Ring verdreht werden kann. Auch dieser Ring kann zur nachträglichen Montage der feuerfesten Ausführungsform geteilt ausgebildet sein. Die Laschen der Rohrmanschette können dabei gleichzeitig als Zentrierung wie auch dem Zusammenhalt der Einzelteile des Ringes dienen. Nach der Montage werden die verbliebenen Freiräume mit Mörtel, insbesondere Schamotte-Mörtel, verschlossen.

Der mit Dichtmittel gefüllte Hohlkörper besteht bevorzugterweise aus dünnem Glas, welches bei einer Druckbelastung auf die Rohrmanschette ringsum zerbricht und das Dichtmittel gleichzeitig über den gesamten Umfang freisetzt. Denkbar ist auch die Verwendung eines Hohlkörpers mit dünner Kunststoffhaut, wobei jedoch sichergestellt werden muss, dass das Dichtmittel nicht nur an einer Stelle austreten kann, was durch die Anordnung mehrerer, abschnittsweise radial angeordneter Teilvolumina erreicht werden kann oder durch die Anordnung zusätzlicher Laschen, die vom vorderen Ende der Rohrdurchführung schräg radial nach außen gerichtet sind und im Neuzustand einen Hohlkörper radial umgreifen und beim Einschieben in den Durchgang an den hohlzylindrischen Abschnitt der Rohrmanschette angedrückt werden und die Kunststoffhaut gleichzeitig an mehreren Stellen zerstören. Solche Laschen können bevorzugterweise weitere, radial sich nach außen erstreckende Widerhaken aufweisen, mit denen sie eine Rohrdurchführung zusätzlich kraft- und formschlüssig in einem Durchgang verriegeln.

Vorteilhaft ist weiterhin eine Ausführungsform der Erfindung mit einer zur wand hin mit Zacken oder spitzen versehenen Fläche des tellerförmigen Abschnittes, der zudem nach innen konisch schmaler werdend ausgebildet ist, wodurch sich einem radialen Herausdrücken von Dichtmittel entgegengewirkt werden kann und die Zacken oder spitzen einen Freiraum für das harz aufrechterhalten, so dass immer eine Mindestschichtdicke gewährleistet bleibt.

Nachfolgend sind einige Ausführungsbeispiele der Erfindung anhand von Zeichnungen näher beschrieben. Es zeigen:
- Fig. 1: zeigt in ihrem oberen und unteren Teil jeweils eine geschnittene Teilansicht einer Rohrdurchführung durch eine Außenwand,
- Fig. 2: eine hoch feuerfeste Rohrdurchführung im Teilschnitt und
- Fig. 3: eine Ansicht einer Rohrdurchführung mit axialer Teilungsebene.
Die Rohrdurchführung besteht aus einer Rohrmanschette 1;11, die einen hohlzylindrischen Abschnitt 2;12 und einen tellerförmigen Abschnitt 3;13 aufweist, wobei sich letzterer dem hohlzylindrischen Abschnitt 2;12 anschließt. Auf den hohlzylindrischen Abschnitt 2;12 ist entweder ein einzelner schlauchförmiger Hohlkörper 6 aufgesetzt, der mit aushärtendem Dichtmittel 7 gefüllt ist, oder es werden zwei separate Hohlkörper 6;16 verwandt, die mit verschiedenen Komponenten von Dichtmittel 7;17 befüllt sind, beispielsweise mit einer Grundmasse und einem Härter, sodass durch ein Eindrücken unter gleichzeitigem Drehen der Rohrmanschette 1;11 und Zerstörung der Hohlkörpers 6;16 das Dichtmittel 7;17 austritt und sich im horizontalen Durchgang 8, im Spalt zwischen Hauswand 9 und dem tellerförmigen Abschnitt 3;13 sowie durch Durchbrechungen 5 im hohlzylindrischen Abschnitt 2;12 bis auf das Rohr 10 hindurch verteilt und gegebenenfalls vollständig vermischt und dort aushärtend eine haltbare, stabile und wasserdichte Rohrdurchführung bildet.

Am tellerförmigen Abschnitt 3 sind axial hervortretende Laschen 4 angeordnet, die als Handhabungshilfen zur Montage der Rohrdurchführung dienen. Diese Laschen 4 können auch durch Werkzeugeingriffe 14, die als Ausnehmungen in dem tellerförmigen Abschnitt 13 eingebracht sind, ersetzt sein.

Der Austritt von Dichtmittel 7;17 in den freien Raum zwischen Rohr 10 und Wand 9 wird dadurch verhindert, das im stirnseitigen Bereich des hohlzylindrischen Abschnitts 12 der Rohrmanschette eine radial umlaufende Federlasche 15 vorgesehen sein, die sich elastisch an die Innenfläche des Wanddurchgangs anlegen kann und zur zusätzlichen mechanischen Befestigung der Rohrmanschette in einer Wand sich dort abstützende Rastnasen 26 aufweist.

Um sicher zu stellen, dass das Dichtmittel 7;17 nicht nur an einer Stelle aus dem Hohlkörper 6;16 austritt, sind zusätzlicher Laschen 27, die vom vorderen Ende des hohlzylindrigen Abschnitts 2;12 der Rohrdurchführung schräg radial nach außen gerichtet sind und im Neuzustand einen Hohlkörper radial umgreifen oder tangieren und beim Einschieben der Rohrmanschette in den Durchgang an den hohlzylindrischen Abschnitt 2;12 angedrückt werden und die Kunststoffhaut gleichzeitig an mehreren Stellen zerstören. Diese Laschen 27 weisen weitere, sich radial nach außen erstreckende Widerhaken 28 auf, mit denen sie eine Rohrdurchführung zusätzlich kraft- und formschlüssig in einem Durchgang verriegeln.

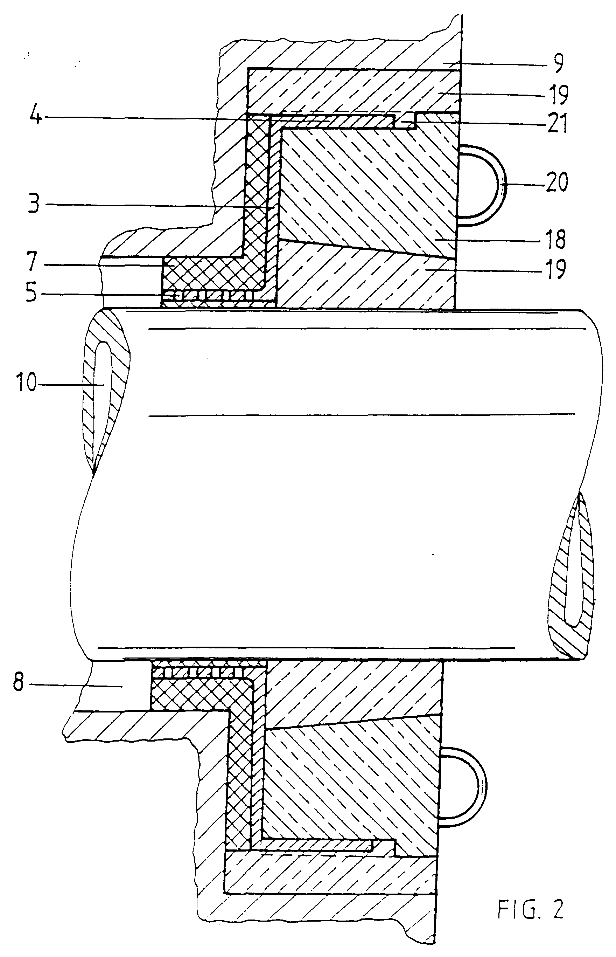

Bei einer hoch feuerfesten Ausführung der Rohrdurchführung sind, wie in Fig. 2 dargestellt, Schlaufen 20 in einem Ring 18 eingegossen, welcher Ohrentaschen 21 für die Laschen 4 der Rohrmanschette 1 aufweist, sodass über die Schlaufen 20 ein Verdrehen des Ringes und der Rohrmanschette 1 erfolgen kann, wobei die Laschen 4 gleichzeitig für eine Zentrierung des Ringes 18 sorgen. Dieser wird nach der Montage mittels Schamotte-Mörtel 19 in einer Wand 9 festgelegt.

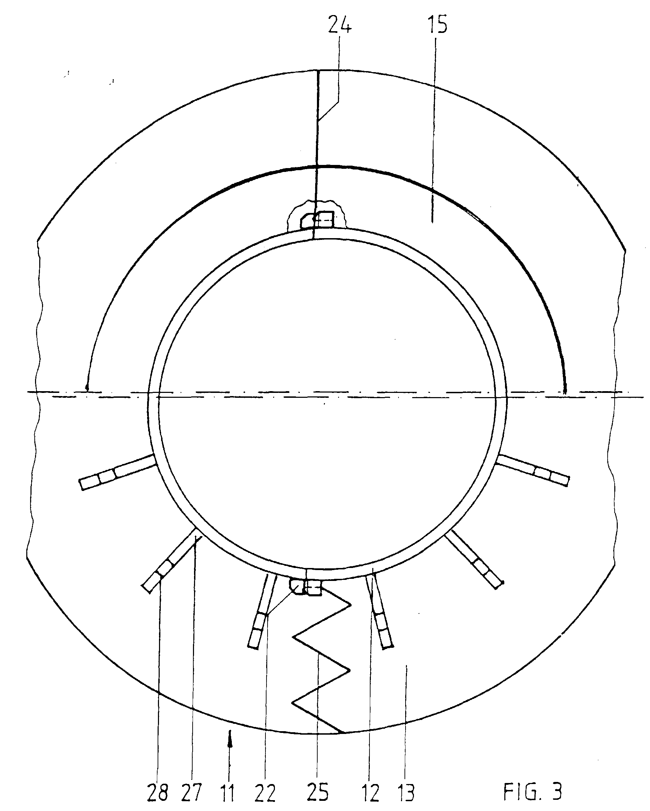

Der Ring 18 kann, ebenso wie die in Fig. 3 dargestellte Rohrmanschette 1;11 über eine axiale Teilungsebene verfügen, die es ermöglicht, die Rohrdurchführung auch nachträglich zu montieren. Dazu sind am hohlzylindrischen Abschnitt 2;12 ineinander eingreifende Rasten 22 angeordnet. Die Hälften der Rohrmanschette könne dabei glatte Stoßkanten 24 oder gezinkte Stoßkanten 25 aufweisen.

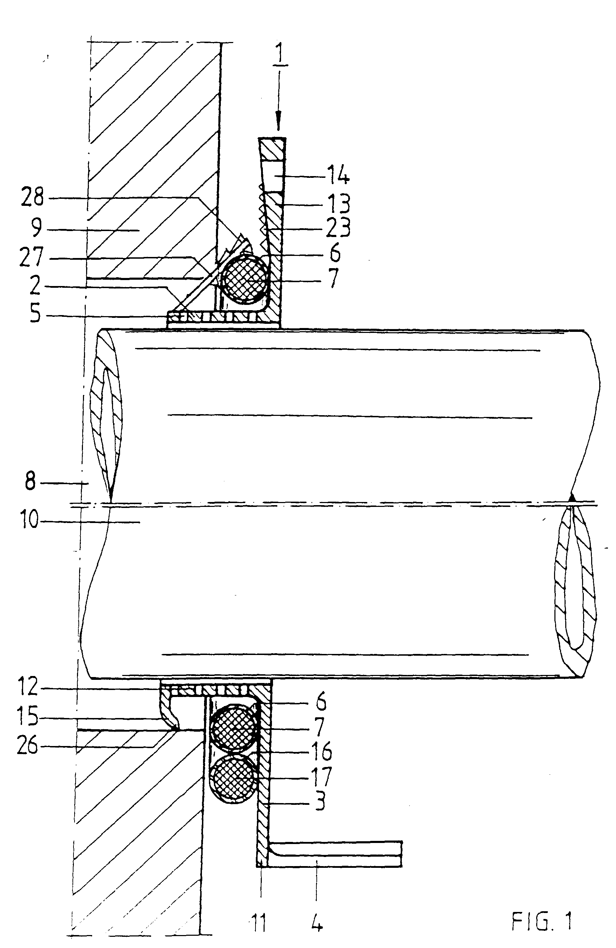

Der tellerförmige Abschnitt 13 einer Ausführungsform, gemäß Fig. 1 oben, weist an seiner zur Wand 9 gerichteten Seite einen von außen nach innen konisch schmaler werdend verlaufenden Querschnitt mit vorspringenden Zacken oder Spitzen 23 auf, wobei letztere zum einen dazu dienen in Verbindung mit der Konizität dafür Sorge zu tragen, dass das Dichtmittel 7;17 nicht radial aus dem Spalt zwischen Wand 9 und tellerförmigem Abschnitt 13 herausgedrückt werden kann und zum anderen, dass eine definierte Schichtdicke aufrechterhalten bleibt. Radial umlaufende Spitzen 23 erzeugen weiterhin ein Art Labyrinthspaltdichtung, falls die Haftwirkung des Dichtmittels einmal versagen sollte.

## Patentansprüche

1. Rohrdurchführung, insbesondere für im Erdreich oder unter Wasser verlegte Ver- und Entsorgungsleitungen jeglichen Durchmessers durch in Wände (9) eingebrachte Durchgänge (18), dadurch gekennzeichnet, dass die Rohrdurchführung aus einer Rohrmanschette (1;11) besteht, die einen hohlzylindrischen Abschnitt (2;12) und einen sich daran anschließenden tellerförmigen Abschnitt (3;13) aufweist, der hohlzylindrische Abschnitt (2;12) einen mit dem Außendurchmesser eines Rohres (10) identischen oder geringfügig größeren Innendurchmesser besitzt und auf dem hohlzylindrischen Abschnitt (2;12) mindestens ein Hohlkörper (6;16) mit zerstörbarer Hülle angeordnet ist, der mit einem Dichtmittel (7;17) gefüllt ist.

2. Rohrdurchführung nach Anspruch 1, dadurch gekennzeichnet, dass der Hohlkörper (6;16) schlauchförmig ausgebildet ist und ein oder mehrere Hohlkörper (6;16) über den Umfang des hohlzylindrischen Abschnittes (2;12) angeordnet sind.

3. Rohrdurchführung nach einem der vorgenannten Ansprüche, dadurch gekennzeichnet, dass das Dichtmittel (7;17) aus einem aushärtenden ein- oder mehrkomponentigem Harz besteht.

4. Rohrdurchführung nach Anspruch 3, dadurch gekennzeichnet, dass im hohlzylindrischen Abschnitt (2;12) radiale Durchbrechungen (5) angeordnet sind.

5. Rohrdurchführung nach einem der vorgenanten Ansprüche, dadurch gekennzeichnet, dass im vorderen Bereich eines hohlzylindrischen Abschnitts (2;12) eine radial umlaufende Federlasche (15) angeordnet ist.

6. Rohrdurchführung nach einem der vorgenannten Ansprüche, dadurch gekennzeichnet, dass am tellerförmigen Abschnitt (3) axial vorspringende Laschen (4) als Handhabungshilfen angeformt oder Werkzeugeingriffe (14) eingeformt sind.

7. Rohrdurchführung nach einem der vorgenannten Ansprüche, dadurch gekennzeichnet, dass der Hohlkörper (6;16) aus dünnem Glas oder einer dünnen Kunststoffhaut besteht.

8. Rohrdurchführung nach einem der vorgenannten Ansprüche, dadurch gekennzeichnet, dass sie axial geteilt ausgebildet ist und ineinander eingreifende Rasten (22) aufweist.

9. Rohrdurchführung nach einem der vorgenannten Ansprüche, dadurch gekennzeichnet, dass eine hoch feuerfeste Version einen Ring (18) mit eingegossenen Schlaufen (20) oder eingeformten Handhaben und Ohrentaschen (21) für die Laschen (4) der Rohrmanschette (1;11) aufweist und im Einbauzustand mit Mörtel (19) in einer Wand (9) festgesetzt ist.

10. Rohrdurchführung nach Anspruch 11, dadurch gekennzeichnet, dass der Ring (18) aus Beton oder einem anderen unbrennbaren Material wie Schaumglas (Foamglas) besteht.
